# EUROPEAN PATENT SPECIFICATION

(11) **EP 2 729 418 B1**
(45) Date of publication and mention of the grant of the patent: **25.10.2017**
(21) Application number: 12759178.2
(22) Date of filing: 22.06.2012
(51) Int. Cl.: C02F 1/68

(54) **DEVICE FOR DOSING CHEMICALS IN HEATING SYSTEMS**
VORRICHTUNG ZUM DOSIEREN CHEMISCHER REAGENZIEN IN HEIZUNGSSYSTEMEN
DISPOSITIF DE DOSAGE DE RÉACTIFS CHIMIQUES DANS DES SYSTÈMES DE CHAUFFAGE

(30) Priority: 07.07.2011 IT MO20110167
(43) Date of publication of application: 14.05.2014
(73) Proprietor: AMG S.r.l., 42015 Correggio (RE) (IT)
(72) Inventor: LODI, Andrea, 42015 Correggio (RE) (IT)
(74) Representative: Brunacci, Marco
(86) International application number: PCT/IB2012/001248
(87) International publication number: WO 2013/005086

(56) References cited:
- US-A- 3 476 137

## Description

### Technical Field

The present invention relates to a device for dosing chemical reagents in heating systems.

### Background Art

The fitting is known of a dosing device for chemical reagents, such as polyphosphates and silicon polyphosphates, to heating plants in order to "soften" water, or as anti-scale treatment.

The known devices for dosing chemical reagents comprise a chemical reagent storage tank and a tubular element, which is connected to a water flow line and which is put in communication with the tank by means of an outward pipe for the water to be treated and a return pipe for the water to which the reagent has been added.

The devices of known type generally have two different conformations depending on their intended use.

In fact, such dosing devices can be wall mounted, in which case they have an overturned L configuration, or fitted under the boiler, in which case they extend longitudinally and have lateral overall dimensions considerably smaller than those of the wall-mounted installation. More in particular, such different conformation is due to the fact that in the case of the under-the-boiler installation, the room available between one wall and the supporting plate of the couplings of a boiler is very limited including due to the presence of other pipes. These known devices for dosing chemical reagents have therefore a number of drawbacks.

Their use in fact is not at all easy because of the costs required for the manufacture of two different products, because dealers have to keep stocks of both products in their warehouses and because installers have to acquire both types of dosing devices in order to cater to different installation requirements. To overcome these drawbacks, an adjustable dosing device has also been made, equipped with mechanical means of connection of the tubular element to the tank which comprise a first arm associated with the tubular element and a second arm associated with the tank, where such arms are coupled together in rotation and have their respective coupling surfaces sloped by 45° with respect to a horizontal plane.

The rotation of the first arm with respect to the second arm, and therefore the reciprocal rotation of the above-mentioned coupling surfaces, allows obtaining two different configurations of the dosing device, a first configuration wherein the first and the second arms are arranged to define an overturned L and a second configuration wherein the first arm is turned by 90° with respect to the first configuration to allow the dosing device itself to be installed under the boiler.

Even this known type of dosing device has some drawbacks.

In fact, this known dosing device is of complex realization in particular due to the presence of the coupling surfaces arranged at 45° with respect to a horizontal plane.

This arrangement, in fact, calls for the execution of complex mechanical jobs needed to define the correct coupling between the sloped surfaces and for the realization of the outward and return water pipes.

Furthermore, the presence of the 45° sloped surfaces results in the outward and return pipes having a series of sections sloping the one to the other in the two possible configurations, with consequent high flow resistance.

Again, the 45° slope of the coupling surfaces results in the first and the second arm being offset the one to the other including in the under-the-boiler working configuration, and consequently in the reciprocally coupled areas being subject to significant mechanical stresses.

### Description of the Invention

The main aim of the present invention is to provide a device for dosing chemical reagents in heating systems which allows to comply with any condition of use and which is, at the same time, easy to make and use.

Within this aim, one object of the present invention is to provide a device for dosing chemical reagents which allows to reduce, compared to the adjustable devices of known type, flow resistance and mechanical stresses acting on the mechanically coupled parts.

Another object of the present invention is to provide a device for dosing which can also be used in intermediate configurations compared to the wall-mounted and under-the-boiler configurations, so that it has a wide versatility of use which makes it suitable for any use.

Another object of the present invention is to provide a device for dosing chemical reagents in heating systems which allows to overcome the mentioned drawbacks of the state of the art within the ambit of a simple, rational, easy and effective to use as well as low cost solution.

The above objects are achieved by the present device for dosing chemical reagents in heating systems, comprising:
- at least a tank for containing at least a chemical reagent;
- at least a tubular element connectable to a water flow line;
- mechanical and hydraulic connection means of said tubular element to said tank which comprise at least an outward pipe, suitable for introducing water which crosses said tubular element in said tank, and at least a return pipe, suitable for bringing water mixed with said reagent from said tank into said tubular element;
characterised by the fact that said connection means comprise at least a first and a second portion associated with said tank and with said tubular element respectively, wherein said second portion is coupled in rotation to said first portion around a substantially horizontal axis and by the fact that it comprises removable locking means of said second portion with respect to said first portion.

### Brief Description of the Drawings

Other characteristics and advantages of the present invention will become more evident from the description of a preferred, but not sole, embodiment of a device for dosing chemical reagents in heating systems, illustrated purely as an example but not limited to the annexed drawings in which:
figure 1 is an axonometric view of a device according to the invention, in a first extreme use configuration;
figure 2 is an axonometric view of a device of figure 1 in a second extreme use configuration;
figure 3 is a section view of the first portion of the device of figure 1;
figure 4 is a first section view of the second portion of the device of figure 1;

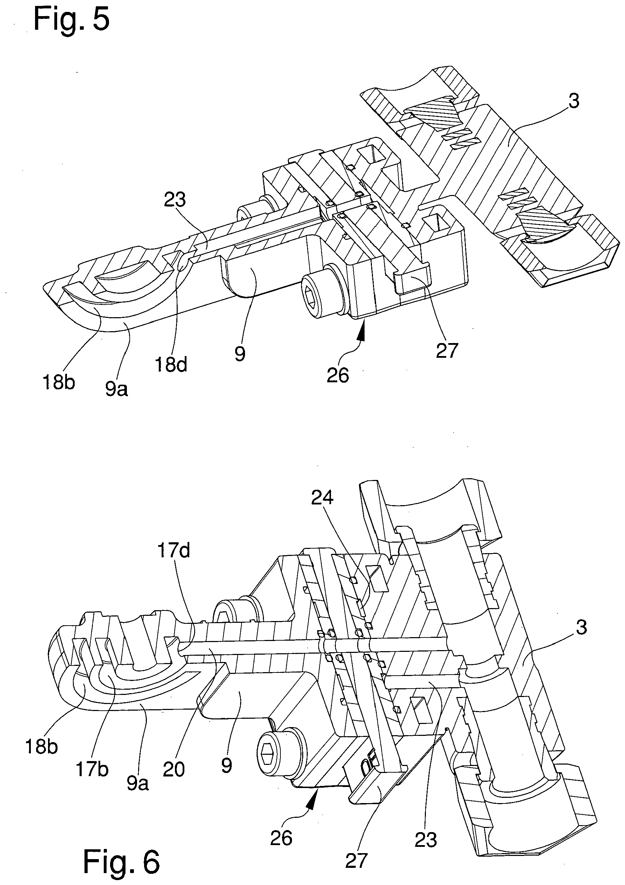

figure 5 is a second section view of the second portion of the device of figure 1;
figure 6 is a third section view of the second portion of the device of figure 1.

### Embodiments of the Invention

With particular reference to such figures, globally indicated by 1 is a device for dosing chemical reagents in heating systems.

The device 1 comprises at least one tank 2 for containing at least one chemical reagent, at least one tubular element 3 connectable to a flow line (not shown) of the water to be treated and mechanical and hydraulic connection means 4 for connecting the tubular element 3 to the tank 2.

More in particular, the tubular element 3 comprises at least one inlet mouth 3a for the water to be treated and at least one outlet mouth 3b for the treated water connectable, e.g., to a boiler or to another device to be supplied with "softened'" water.

The connection means 4 comprise at least one outward pipe 5, suitable for introducing the water to be treated which enters the tubular element 3 inside the tank 2, and at least one return pipe 6, suitable for once again conveying the water to which has been added the reagent from the tank 2 into the tubular element 3.

Suitably, the tank 2 also comprises a cup container 7 arranged inside it and suitable for containing the chemical reagent.

According to the invention, the connection means 4 comprise at least one first and one second portion 8 and 9 associated to the tank 2 and to the tubular element 3 respectively, wherein the second portion 9 is coupled in rotation with the first portion 8 around a substantially horizontal axis and identified in the illustrations by the reference number 10.

According to the invention, furthermore, the device 1 comprises removable locking means 11 of the rotation of the second portion 9 with respect to the first portion 8.

Advantageously, the first and the second portions 8 and 9 have respective reciprocal coupling areas, defined in correspondence to relative extremity sections substantially opposite those associated with the tank 2 and with the tubular element 3. More in detail, each of the coupling areas of the first and of the second portions 8 and 9 have respective reciprocal coupling surfaces 8a, 9a arranged substantially vertically. Such coupling surfaces 8a, 9a are substantially flat, facing one another and resting against one another.

Preferably, the first portion 8 is associated integral with the tank 2. More in particular, the tank 2 has an inner thread suitable for engaging with a corresponding outer thread defined on the first portion 8.

In the embodiment shown in the illustrations, the second portion 9 is associated integral with the tubular element 3.

In an alternative embodiment, not shown in the illustrations, the tubular element 3 is associated in rotation with the second portion 9 around an axis substantially perpendicular to the axis of the tubular element itself. In this embodiment, the tubular element 3 can be positioned in various ways so as to adapt to the specific requirements of the case.

In the present treatise, the terms "horizontal", "vertical", and generally speaking all spatial positioning are referred to the configuration of use of the device 1, wherein the tank 2 is substantially positioned vertically.

Advantageously, the second portion 9 moves between two extreme configurations, angularly staggered to one another by 90°, passing through a plurality of intermediate working configurations.

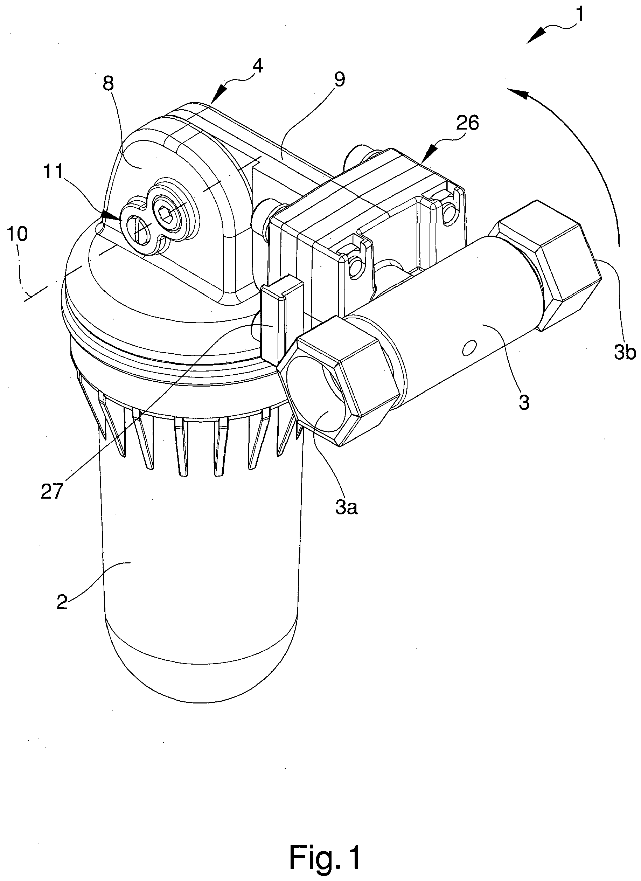

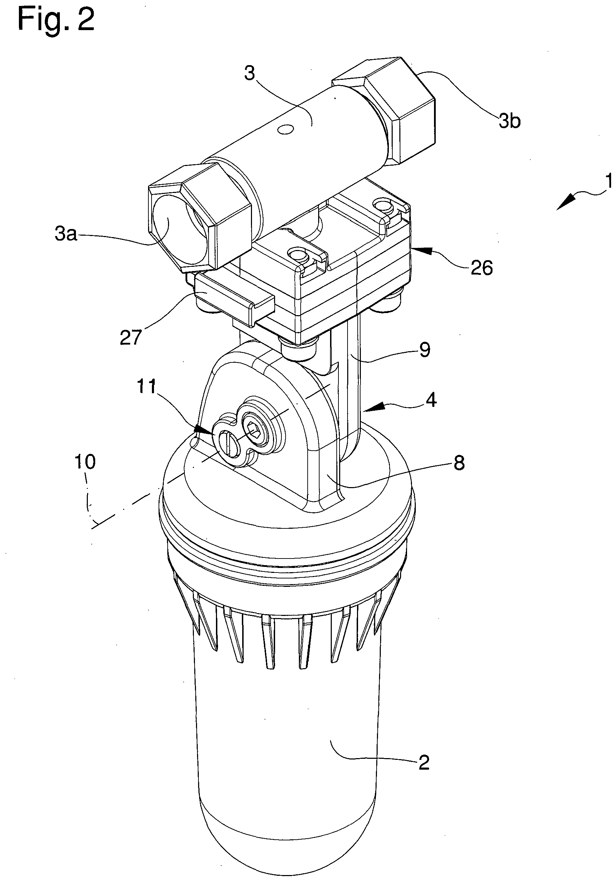

More in detail, in one of such extreme configurations, shown in figure 1, the first and the second portions 8 and 9 are arranged the one to the other to define an overturned L for the wall mounting of the device 1, while in the other extreme configuration, shown in figure 2, the first and the second portions 8 and 9 are substantially vertically aligned the one with the other for the under-the-boiler installation of the device 1.

In the preferred embodiment shown in the illustrations, the locking means 11 are associated with the connection means 4 in correspondence to the reciprocal coupling areas of the portions 8 and 9.

More in particular, the locking means 11 comprise at least one hole 12 which crosses at least partially the portions 8 and 9 in correspondence to the coupling surfaces 8a and 9a and comprising threaded means 13,14 suitable for engaging in the hole 12 to lock in rotation the second portion 9 with respect to the first portion 8.

In the embodiment shown in the illustrations, the hole 12 is of the through type, and therefore passes through both the portions 8 and 9 across their entire thickness in correspondence to the reciprocal coupling areas and the threaded means 13, 14 are of the type of a bolt 13, which inserts itself in the hole 12, and of a nut 14 suitable for cooperating with the bolt 13.

The connection means 4 also comprise at least one bellows pipe 15 associated with the first portion 8 and arranged inside the tank 2.

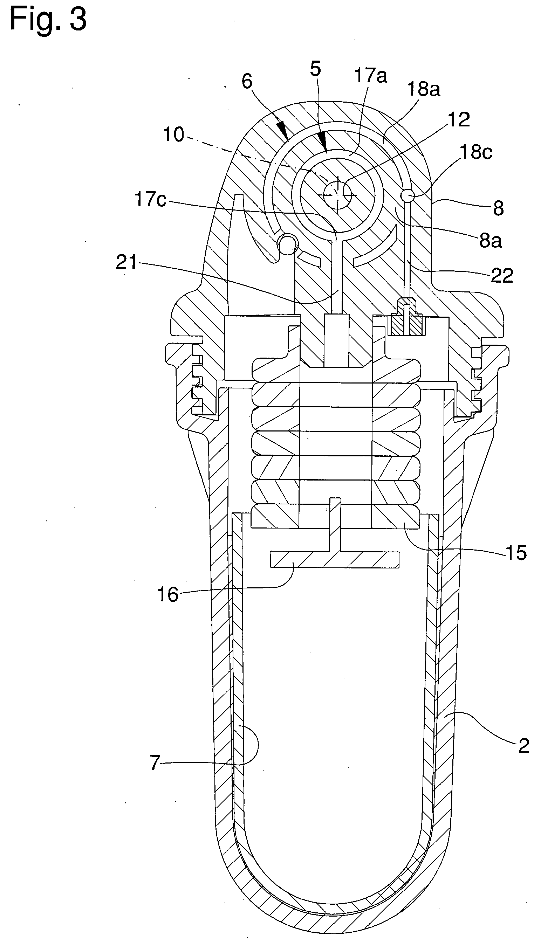

As shown in the figure 3, the outward pipe 5 communicates with the inside of the bellows pipe 15 to which is also associated, in correspondence to its lower extremity, at least one diffuser element 16 suitable for diffusing in a substantially uniform way the water to be treated inside the tank 2. At least one of the outward and return pipes 5 and 6, preferably both, comprises at least a respective substantially (inasmuch as it might not define a complete circumference) annular section 17,18, defined in correspondence to the reciprocal coupling areas of the portions 8 and 9 and coaxial to the rotation axis 10 of the second portion 9 with respect to the first portion 8, so as to allow the hydraulic connection between the portions 8 and 9 during the entire rotation movement of the second portion itself.

Preferably, the return pipe 6 has an annular section 18 arranged outside and coaxially to the annular section 17 of the outward pipe 5. Between the annular sections 17 and 18 are suitably arranged seal means (not shown), e.g., O-rings, suitable for avoiding leakages between the outward pipe 5 and the return pipe 6. In the preferred embodiment shown in the illustration, each of the annular sections 17 and 18 comprises a relative first and second part, 17a, 18a and 17b, 18b respectively, these too substantially annular and complementary the one to the other, which are defined on the first and on the second portion 8 and 9 respectively in correspondence to the relative coupling surfaces 8a and 9a. More in particular, the annular section 17 comprises a first part 17a and a second part 17b which are also annular and defined on the coupling surface 8a and on the coupling surface 9a, respectively. In the same way, the annular section 18 comprises a first part 18a and a second part 18b which are also substantially annular and defined on the coupling surface 8a and on the coupling surface 9a respectively.

Each first part 17a, 18a is therefore constantly in communication with the respective second part 17b, 18b during the rotation of the second portion 9 around the axis 10.

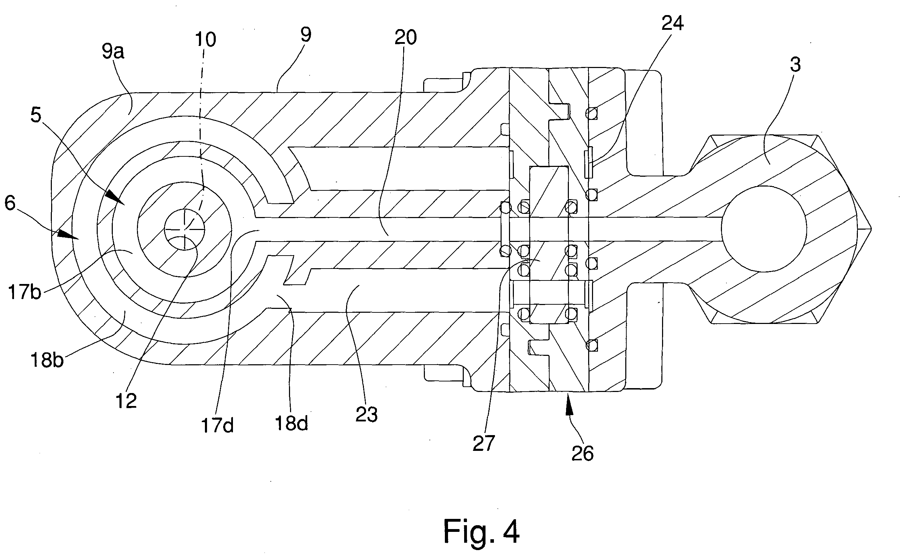

More in detail, each of the first parts 17a and 18a has a relative first port 17c, 18c communicating with the tank 2 and each of the second parts 17b and 18b has a relative second port 17d, 18d communicating with the tubular element 3. As shown in the figures 3 and 4, the outward pipe 5 also comprises a first rectilinear section 20, defined in the second portion 9 and suitable for connecting the tubular element 3 to the annular section 17 by means of the second port 17d, and a second rectilinear section 21, defined in the first portion 8 and which connects the annular section 17 to the tank 2 by means of the first port 17c.

More in particular, the second rectilinear section 21 faces inside the bellows pipe 15.

In the same way, the return pipe 6 comprises a first rectilinear section 22, defined in the first portion 8 and suitable for placing in communication the tank 2 with the annular section 18 by means of the first port 18c, a second rectilinear section 23, defined in the second portion 9 and which branches from the second port 18d terminating in an annular chamber 24, and a third rectilinear section 25 suitable for placing in communication the annular chamber 24 with the tubular element 3. The first rectilinear section 22 is arranged outside the bellows pipe 15.

Preferably, the connection means 4 comprise at least one valve device 26 which can be operated to open/close the outward and return pipes 5 and 6 so as to place in communication/insulate the tubular element 3 and the tank 2.

In the embodiment shown in the illustrations, the valve device 26 is of the guillotine type and comprises a drawer shutter 27, mobile between at least a closing position, wherein it obstructs the outward and return pipes 5 and 6, and at least an opening position, wherein it allows the water to flow through the tubular element 3 to the tank 2 and vice versa.

Suitably, the valve device 26 is associated with the second portion 9 and the shutter element 27 is suitable for intercepting the first rectilinear section 20 and the second rectilinear section 23 of the outward pipe 5 and of the return pipe 6 respectively.

The operation of the present invention is the following.

The device 1 is fitted to a water flow line regulating the position of the second portion 9 with respect to the first portion 8 depending on requirements.

More in particular, the first thing is to intervene on the locking means 11 so as to free in rotation the second portion 9 after which, once the best work position has been achieved, intervention again occurs on the locking means 11 to fix the configuration obtained and block in rotation the second portion 9 with respect to the first portion 8.

During the rotation of the second portion 9 with respect to the first portion 8 the first and the second parts 17a, 18a and 17b, 18b of the outward and return pipes 5 and 6 are always in communication the one with the other due to their being coaxial with the rotation axis 10. This allows ensuring the communication between the tubular element 3 and the tank 2 in any reciprocal arrangement of the first and the second portions 8 and 9.

In use, the water to be treated which enters the tubular element 3 is conveyed by the outward pipe 5 into the tank 2, passing through the first rectilinear section 20, the annular section 17 and the second rectilinear section 21 in that order. Once it has reached the tank 2, the water mixes with the reagent contained in the tank itself and comes out of the latter through the return pipe 6.

More in detail, the water to which the reagent has been added enters the first rectilinear section 22 and flows across the annular section 18, the second rectilinear section 23, the annular chamber 24 and finally the third rectilinear section 25, through which it reaches the tubular element 3, in that order.

In the event of maintenance jobs having to be performed, the hydraulic connection between the tubular element 3 and the tank 2 can be disengaged by operating on the valve device 26.

It has in fact been ascertained how the described invention achieves the proposed objects and in particular the fact is underlined that it allows easily and practically changing the working configuration of the dosing device depending on the different application requirements.

The device according to the invention is also easy and inexpensive to make.

Again, the device according to the invention allows reducing the mechanical stresses affecting the coupled-together elements, inasmuch as the vertical arrangement of the coupling surfaces permits obtaining the substantial alignment of the first and the second portions in the under-the-boiler use configuration.

Again the device according to the invention has a plurality of use configurations that also allow satisfying different applications from the usual wall-mounted and under-the-boiler installations.

## Claims

1. Device (1) for dosing chemical reagents in heating systems, comprising:
- at least a tank (2) for containing at least a chemical reagent;
- at least a tubular element (3) connectable to a water flow line; and
- mechanical and hydraulic connection means (4) for connecting said tank to said tubular element (3);
wherein said connection means (4) comprise at least an outward pipe (5), suitable for introducing water which crosses said tubular element (3) in said tank (2), and at least a return pipe (6), suitable for bringing water mixed with said reagent from said tank (2) into said tubular element (3);
**characterised by the fact that** said connection means (4) comprise at least a first and a second portion (8, 9) associated at an extremity with said tank (2) and with said tubular element (3) respectively, with said first portion (8) and said second portion (9) being reciprocally coupled in rotation, in the zone of coupling areas defined in the extremity sections of said first and second portions (8, 9) substantially opposite those associated with the tank (2) and with the tubular element (3), around an axis (10) substantially parallel to the axis of said tubular element (3),
**by the fact that** the device further comprises removable locking means (11) of the rotation of said second portion (9) with respect to said first portion (8),
**by the fact that** said second portion (9), associated with said tubular element (3), is suitable to be moved with respect to said first portion (8) between two extreme configurations which are angularly staggered to one another substantially by 90° passing through a plurality of intermediate working configurations,
whereby in one of said extreme configurations the first and the second portions (8, 9) are arranged the one to the other to define an overturned L for the wall mounting of the device, and in the other extreme configuration the first and the second portions (8, 9) are substantially vertically aligned the one with the other for the under-the-boiler installation of the device;
**and by the fact that** each of said outward and return pipes (5, 6) comprises at least a substantially annular section (17, 18) defined on at least one between said first and said second portion (8, 9) in correspondence to the reciprocal coupling areas, said annular sections (8, 9) being substantially coaxial to the rotation axis of said second portion (9) with respect to said first portion (8) so as to allow the hydraulic connection between said tank (2) and said tubular element (3) during the rotation of the second portion itself around its rotation axis (10).

2. Device (1) according to claim 1, **characterised by** the fact that said first and said second portion (8, 9) have respective reciprocal coupling surfaces (8a, 9a) substantially vertical.

3. Device (1) according to one or more of the preceding claims, **characterised by** the fact that the annular section (18) of said return pipe (6) is arranged outside the annular section (17) of said outward pipe (5).

4. Device (1) according to one or more of the preceding claims, **characterised by** the fact that each of said annular sections (17, 18) comprises a first part ( 17a, 18a) and a second part (17b, 18b), these too substantially annular and defined on said first and on said second portion (8, 9) respectively, in correspondence to the respective coupling surfaces (8a, 9a), each of said first parts (17a, 18a) being constantly in communication with the respective second part (17b, 18b) during the rotation of said second portion (9) around its axis (10).

5. Device (1) according to claim 4, **characterised by** the fact that each of said first parts (17a, 18a) has a first port (17c, 18c) communicating with said tank (2) and that each of said second parts (17b, 18b) has a second port (17d, 18d) communicating with said tubular element (3).

6. Device (1) according to one or more of the preceding claims, **characterised by** the fact that said locking means (11) are associated with said connection means (4) in correspondence to the reciprocal coupling areas of said portions (8, 9).

7. Device (1) according to one or more of the preceding claims, **characterised by** the fact that said locking means (11) comprise at least a hole (12) which crosses at least partially said portions (8, 9) in correspondence to said coupling surfaces (8a, 9a) and comprise threaded means (13, 14) suitable for cooperating with said hole (12) to lock in rotation said second portion (9) with respect to said first portion (8).

8. Device (1) according to one or more of the preceding claims, **characterised by** the fact that said tubular element (3) is associated in rotation with said second portion (9) around an axis substantially at right angles to the axis of the tubular element itself.

9. Device (1) according to one or more of the preceding claims, **characterised by** the fact that said connection means (4) comprise at least a valve device (26) that can be operated to open/close said outward and return pipes (5, 6) so as to place in communication/insulate said tubular element (3) and said tank (2).

10. Device (1) according to claim 9, **characterised by** the fact that said valve device (26) is associated with said second portion (9).

## Patentansprüche

1. Vorrichtung (1) zur Dosierung von chemischen Reagenzien in Heizsystemen, umfassend:
- mindestens einen Tank (2), um mindestens ein chemisches Reagenz zu beinhalten;
- mindestens ein rohrförmiges Element (3) das an eine Wasserdurchfluss-Linie anschließbar ist; und
- mechanische und hydraulische Verbindungsmittel (4), um den Tank mit dem rohrförmigen Element zu verbinden;
wobei die Verbindungsmittel (4) mindestens ein nach außen führendes Rohr (5) umfassen, das geeignet ist, um Wasser, das das rohrförmige Element (3) durchquert, in den Tank (2) einzuführen, und mindestens ein Rücklaufrohr (6), das geeignet ist, um Wasser, das mit dem Reagenz aus dem Tank (2) vermischt ist, in das rohrförmige Element (3) zu bringen;
**dadurch gekennzeichnet, dass** die Verbindungsmittel (4) mindestens einen ersten und einen zweiten Teil (8, 9) umfassen, die an einem äußeren Ende mit dem Tank (2) beziehungsweise mit dem rohrförmigen Element (3) verbunden sind, wobei der erste Teil (8) und der zweite Teil (9) gegenseitig drehbar gekoppelt sind, in der Zone von Kupplungsbereichen, die in den äußersten Endbereichen der ersten und zweiten Teile (8, 9) im Wesentlichen gegenüber liegend zu denen definiert sind, die mit dem Tank (2) und mit dem rohrförmigen Element (3), um eine Achse (10) im Wesentlichen parallel zur Achse des rohrförmigen Elementes (3) verbunden sind,
dass die Vorrichtung ferner abnehmbare Verriegelungsmittel (11) der Drehung des zweiten Teils (9) in Bezug auf den ersten Teil (8) umfasst,
dass der zweite Teil (9), der mit dem rohrförmigen Element (3) verbunden ist, dazu geeignet ist, in Bezug auf den ersten Teil (8) zwischen zwei extremen Einstellungen, die zueinander im Wesentlichen um 90° versetzt sind, und eine Vielzahl von dazwischenliegenden Arbeitseinstellungen durchlaufend, bewegt zu werden,
wobei in einer der extremen Einstellungen der erste und der zweite Teil (8, 9) derart zueinander angeordnet sind, dass ein gekipptes L definiert wird für die Wand zur Montierung der Vorrichtung, und dass in der anderen extremen Einstellung der erste und der zweite Teil (8, 9) im Wesentlichen vertikal zueinander ausgerichtet sind für die unter-dem-Boiler-Installation der Vorrichtung;
und, dass jedes der nach außen führenden Rohre und Rücklaufrohre (5, 6) mindestens einen im Wesentlichen ringförmigen Bereich (17, 18) umfasst, der mindestens auf eins definiert ist von dem ersten und dem zweiten Teil (8, 9) in Übereinstimmung mit den gegenseitigen Kupplungsbereichen, wobei die ringförmigen Bereiche (8, 9) im Wesentlichen koaxial zu der Rotationsachse des zweiten Teils (9) mit Bezug zu dem ersten Teil (8) sind, um die hydraulische Verbindung zwischen dem Tank (2) und dem rohrförmigen Element (3) während der Drehung des zweiten Teils um seine eigene Rotationsachse (10) zu erlauben.

2. Vorrichtung (1) nach Anspruch 1, **dadurch gekennzeichnet, dass** der erste und der zweite Teil (8, 9) jeweils gegenseitige Verbindungsflächen (8a, 9a) haben, die im Wesentlichen vertikal sind.

3. Vorrichtung (1) nach einem oder mehreren der vorhergehenden Ansprüche, **dadurch gekennzeichnet, dass** der ringförmige Bereich (18) des Rücklaufrohres (6) außerhalb des ringförmigen Bereichs (17) des nach außen laufenden Rohres (5) angebracht ist.

4. Vorrichtung (1) nach einem oder mehreren der vorhergehenden Ansprüche, **dadurch gekennzeichnet, dass** jeder der ringförmigen Bereiche (17, 18) ein erstes Stück (17a, 18a) und ein zweites Stück (17b, 18b) umfasst, wobei diese ebenfalls im Wesentlichen ringförmig sind und festgelegt sind auf dem ersten beziehungsweise dem zweiten Teil (8, 9) in Übereinstimmung mit den jeweiligen Verbindungsflächen (8a, 9a), wobei jedes dieser ersten Stücke (17a, 18a) während der Drehung des zweiten Teils (9) um seine Achse (10) in ständiger Verbindung mit dem jeweiligen zweiten Stück (17b, 18b) ist.

5. Vorrichtung (1) nach Anspruch 4, **dadurch gekennzeichnet, dass** jedes der ersten Stücke (17a, 18a) einen ersten Anschluss (17c, 18c) hat, der mit dem Tank (2) verbunden ist und dass jedes der zweiten Stücke (17b, 18b) einen zweiten Anschluss (17d, 18d) hat, der mit dem rohrförmigen Element (3) verbunden ist.

6. Vorrichtung (1) nach einem oder mehreren der vorhergehenden Ansprüche, **dadurch gekennzeichnet, dass** die Verriegelungsmittel (11) mit den Verbindungsmitteln (4) verbunden sind in Übereinstimmung zu den gegenseitigen Kupplungsflächen der Teile (8, 9).

7. Vorrichtung (1) nach einem oder mehreren der vorhergehenden Ansprüche, **dadurch gekennzeichnet, dass** die Verriegelungsmittel (11) mindestens ein Loch (12) umfassen, das mindestens teilweise die Teile (8, 9) kreuzt in Übereinstimmung zu den Kupplungsflächen (8a, 9a) und die Gewindemittel (13, 14) umfassen, die geeignet sind, um mit dem Loch (12) zusammen zu wirken, um das zweite Teil (9) hinsichtlich der Drehung mit Bezug zu dem ersten Teil (8) zu verriegeln.

8. Vorrichtung (1) nach einem oder mehreren der vorhergehenden Ansprüche, **dadurch gekennzeichnet, dass** das rohrförmige Element (3) drehbar mit dem zweiten Teil (9) entlang einer Achse im Wesentlichen im rechten Winkel zu der Achse des rohrförmigen Elementes selbst verbunden ist.

9. Vorrichtung (1) nach einem oder mehreren der vorhergehenden Ansprüche, **dadurch gekennzeichnet, dass** die Verbindungsmittel (4) mindestens eine Ventilvorrichtung (26) umfassen, die betrieben werden kann, um die nach außen führenden Rohre und Rücklaufrohre (5, 6) zu öffnen/zu schließen, um das rohrförmige Element (3) und den Tank (2) in Verbindung zu setzten/ zu isolieren.

10. Vorrichtung (1) nach Anspruch 9, **dadurch gekennzeichnet, dass** die Ventilvorrichtung (26) mit dem zweiten Teil (9) verbunden ist.

## Revendications

1. Dispositif (1) de dosage de réactifs chimiques dans des systèmes de chauffage, comprenant :
- au moins une cuve (2) pour contenir au moins un réactif chimique ;
- au moins un élément tubulaire (3) pouvant être raccordé à une conduite d'écoulement d'eau ; et
- des moyens de raccordement mécanique et hydraulique (4) pour raccorder ladite cuve audit élément tubulaire (3) ;
dans lequel lesdits moyens de raccordement (4) comprennent au moins un tuyau extérieur (5), adapté pour introduire de l'eau qui traverse ledit élément tubulaire (3) dans ladite cuve (2), et au moins un tuyau de retour (6), adapté pour transporter l'eau mélangée avec ledit réactif à partir de ladite cuve (2) dans ledit élément tubulaire (3) ;
**caractérisé par le fait que** lesdits moyens de raccordement (4) comprennent au moins une première et une seconde portion (8, 9) associées à une extrémité à ladite cuve (2) et audit élément tubulaire (3) respectivement, ladite première portion (8) et ladite seconde portion (9) étant réciproquement couplées en rotation, dans la zone des régions de couplage définies dans les sections d'extrémité desdites première et seconde portions (8, 9) sensiblement opposées à celles associées à la cuve (2) et à l'élément tubulaire (3), autour d'un axe (10) sensiblement parallèle à l'axe dudit élément tubulaire (3),
**par le fait que** le dispositif comprend en outre des moyens de verrouillage amovibles (11) de la rotation de ladite seconde portion (9) par rapport à ladite première portion (8),
**par le fait que** ladite seconde portion (9), associée audit élément tubulaire (3), est adaptée pour être déplacée par rapport à ladite première portion (8) entre deux configurations extrêmes qui sont angulairement décalées l'une par rapport à l'autre de sensiblement 90° en passant par une pluralité de configurations intermédiaires de travail,
moyennant quoi dans l'une desdites configurations extrêmes la première et la seconde portion (8, 9) sont agencées l'une par rapport à l'autre afin de définir un L renversé pour la fixation au mur du dispositif, et dans l'autre configuration extrême la première et la seconde portion (8, 9) sont alignées de manière sensiblement verticale l'une par rapport à l'autre pour l'installation du dispositif sous la chaudière ; et **par le fait que** chacun desdits tuyaux extérieur et de retour (5, 6) comprend au moins une section sensiblement annulaire (17, 18) définie sur au moins une portion entre ladite première et ladite seconde portion (8, 9) en correspondance avec les régions de couplage réciproque, lesdites sections annulaires (8, 9) étant sensiblement coaxiales à l'axe de rotation de ladite seconde portion (9) par rapport à ladite première portion (8) afin de permettre le raccordement hydraulique entre ladite cuve (2) et ledit élément tubulaire (3) lors de la rotation de la seconde portion elle-même autour de son axe de rotation (10).

2. Dispositif (1) selon la revendication 1, **caractérisé par le fait que** ladite première et ladite seconde portion (8, 9) comportent des surfaces de couplage réciproque respectives (8a, 9a) sensiblement verticales.

3. Dispositif (1) selon une ou plusieurs des revendications précédentes, **caractérisé par le fait que** la section annulaire (18) dudit tuyau de retour (6) est agencée hors de la section annulaire (17) dudit tuyau extérieur (5).

4. Dispositif (1) selon une ou plusieurs des revendications précédentes, **caractérisé par le fait que** chacune desdites sections annulaires (17, 18) comprend une première partie (17a, 18a) et une seconde partie (17b, 18b), celles-ci étant également sensiblement annulaires et définies sur ladite première et sur ladite seconde portion (8, 9) respectivement, en correspondance avec les surfaces de couplage respectives (8a, 9a), chacune desdites premières parties (17a, 18a) étant constamment en communication avec la seconde partie respective (17b, 18b) lors de la rotation de ladite seconde portion (9) autour de son axe (10).

5. Dispositif (1) selon la revendication 4, **caractérisé par le fait que** chacune desdites premières parties (17a, 18a) comporte un premier orifice (17c, 18c) communiquant avec ladite cuve (2) et que chacune desdites secondes parties (17b, 18b) comporte un second orifice (17d, 18d) communiquant avec ledit élément tubulaire (3).

6. Dispositif (1) selon une ou plusieurs des revendications précédentes, **caractérisé par le fait que** lesdits moyens de verrouillage (11) sont associés auxdits moyens de raccordement (4) en correspondance avec les régions de couplage réciproque desdites portions (8, 9).

7. Dispositif (1) selon une ou plusieurs des revendications précédentes, **caractérisé par le fait que** lesdits moyens de verrouillage (11) comprennent au moins un trou (12) qui traverse au moin partiellement lesdites portions (8, 9) en correspondance avec lesdites surfaces de couplage (8a, 9a) et comprennent des moyens filetés (13, 14) adaptés pour coopérer avec ledit trou (12) pour verrouiller en rotation ladite seconde portion (9) par rapport à ladite première portion (8).

8. Dispositif (1) selon une ou plusieurs des revendications précédentes, **caractérisé par le fait que** ledit élément tubulaire (3) est associé en rotation à ladite seconde portion (9) autour d'un axe sensiblement à angle droit par rapport à l'axe de l'élément tubulaire lui-même.

9. Dispositif (1) selon une ou plusieurs des revendications précédentes, **caractérisé par le fait que** lesdits moyens de raccordement (4) comprennent au moins un dispositif à vanne (26) qui peut être actionné pour ouvrir/fermer lesdits tuyaux extérieur et de retour (5, 6) afin de placer en communication/isolement ledit élément tubulaire (3) et ladite cuve (2).

10. Dispositif (1) selon la revendication 9, **caractérisé par le fait que** ledit dispositif à vanne (26) est associé à ladite seconde portion (9).
